(19) Europäisches Patentamt
European Patent Office
Office européen des brevets

(11) Veröffentlichungsnummer: **0 081 139**
**A1**

# (12) EUROPÄISCHE PATENTANMELDUNG

(21) Anmeldenummer: 82110855.2

(22) Anmeldetag: 24.11.82

(51) Int. Cl.³: D 21 H 3/40
C 08 F 232/00
//(C08F232/00, 222/04, 220/02)

(30) Priorität: 08.12.81 DE 3148456

(43) Veröffentlichungstag der Anmeldung: 15.06.83 Patentblatt 83/24

(84) Benannte Vertragsstaaten: AT BE CH DE FR GB IT LI NL SE

(71) Anmelder: BASF Aktiengesellschaft
Carl-Bosch-Strasse 38
D-6700 Ludwigshafen(DE)

(72) Erfinder: Buensch, Helmut, Dr.
Panoramastrasse 81
D-6906 Leimen(DE)

(72) Erfinder: Reichel, Fritz, Dr.
Holunderweg 3
D-6945 Hirschberg(DE)

## (54) Leimungsmittel für Papier.

(57) Leimungsmittel für Papier, die durch Umsetzung von Mischungen polymerisierbarer Verbindungen aus

a) 40 bis 75 Gew.% eines Cyclopentadienmonomeren,
b) 25 bis 50 Gew.% ethylenisch ungesättigten Dicarbonsäureanhydriden, die bis zu 30 Gew.% durch ethylenisch ungesättigte Carbonsäuren mit 3 bis 6 Kohlenstoffatomen ersetzt sein können, und gegebenenfalls
c) 0 bis 25 Gew.% mindestens eines Alkens mit 2 bis 22 C-Atomen, Alkins mit 2 bis 12 C-Atomen, Vinylethers mit 3 bis 15 C-Atomen, Vinylaromaten mit 8 bis 12 C-Atomen, Esters der (Meth)acrylsäure mit 1 bis 22 C-Atome enthaltenden Alkanolen, Vinylesters von gesättigten $C_1$- bis $C_{22}$-Carbonsäuren, Allylverbindungen und/oder (Meth)acrylnitril

bei Temperaturen von 220 bis 280°C innerhalb von 0,5 bis 5 Stunden und Behandeln der Reaktionsprodukte mit wäßrigen Lösungen von Basen hergestellt sind.

EP 0 081 139 A1

Croydon Printing Company Ltd

Leimungsmittel für Papier

Handelsübliche synthetische Oberflächenleimungsmittel für Papier liegen in Form wäßriger Lösungen oder Dispersionen von Ammonium- oder Alkalisalzen von Copolymerisaten aus Styrol und Maleinsäureanhydrid bzw. Styrol und (Meth)-acrylsäure vor. Obwohl diese Produkte zum Teil sehr gute Leimungswerte geben, besitzen sie den Nachteil, daß sie in den modernen, schnellaufenden Papiermaschinen nur in begrenztem Maße einsetzbar sind, da sie stark schäumen.

Aus der GB-PS 1 356 309 sind Harze bekannt, die durch Copolymerisieren von Cyclopentadien mit Butadien und anschließende Umsetzung des Copolymerisates mit 1 bis 40 Gew.%, bezogen auf das Kohlenwasserstoffharz, an Maleinsäureanhydrid erhalten werden. Das Kohlenwasserstoffharz besteht vorzugsweise aus 20 bis 80 Gew.% Cyclopentadien oder Dicyclopentadien und 80 bis 20 Gew.% aus Butadien-1,3. Gemäß den Angaben in den Beispielen dieser Patentschrift wird dieses Kohlenwasserstoffharz mit Maleinsäureanhydrid umgesetzt. Die dabei erhaltenen Produkte können unter anderem auch als Leimungsmittel für Papier verwendet werden. Bei diesem Verfahren erhält man jedoch relativ niedrige Ausbeuten an polymeren Produkten. Wäßrige Lösungen dieser Produkte ergeben bei der Verwendung als Oberflächenleimungsmittel für Papier nur unzureichende Leimungswerte.

Aus der US-PS 2 608 550 ist die Herstellung von Carbonsäureanhydrid-Gruppen enthaltenden Cyclopentadienharzen durch Copolymerisation von Dicyclopentadien mit Maleinsäureanhydrid bekannt. Beim Auflösen der so hergestellten Copolymerisate in wäßrigen Lösungen von Natronlauge oder Ammoniak erhält man dunkelgefärbte Harzlösungen, die

Ks/P

stark schäumen und bereits nach kurzzeitiger Lagerung auszuflocken beginnen.

Aufgabe der Erfindung ist es, ein Leimungsmittel für Papier zur Verfügung zu stellen, das in guter Ausbeute herstellbar ist, nur eine geringe Färbung aufweist und in wäßriger Lösung oder Dispersion in zumindest teilneutralisierter Form eine niedrige Schäumneigung und ein gutes Viskositätsverhalten besitzt sowie eine gute Leimungswirkung aufweist.

Die Aufgabe wird erfindungsgemäß gelöst durch Leimungsmittel für Papier auf Basis von säuremodifizierten Cyclopentadienharzen, wenn die Leimungsmittel durch Umsetzung von Mischungen polymerisierbarer Verbindungen aus

a) 40 bis 75 Gew.% Cyclopentadien, Alkylcyclopentadienen mit 1 bis 3 C-Atomen im Alkylrest, deren Dimeren, Oligomeren, Codimeren oder Cooligomeren oder Gemischen daraus,

b) 25 bis 50 Gew.% ethylenisch ungesättigten Dicarbonsäureanhydriden, die bis zu 30 Gew.% durch ethylenisch ungesättigte Carbonsäuren mit 3 bis 6 Kohlenstoffatomen ersetzt sein können, und gegebenenfalls

c) 0 bis 25 Gew.% mindestens eines Alkens mit 2 bis 22 C-Atomen, Alkins mit 2 bis 12 C-Atomen, Vinylethers mit 3 bis 15 C-Atomen, Vinylaromaten mit 8 bis 12 C-Atomen, Esters der (Meth)acrylsäure mit 1 bis 22 C-Atome enthaltenden Alkoholen, Vinylesters von gesättigten $C_1$- bis $C_{22}$-Carbonsäuren, Allylverbindungen und/oder (Meth)acrylnitril

bei Temperaturen von 220 bis 280°C innerhalb von 0,5 bis 5 Stunden und Behandeln der Reaktionsprodukte mit wäßrigen Lösungen von Basen hergestellt sind.

Polymerisierbare Verbindungen der Gruppe a) sind beispielsweise diejenigen Monomeren, die sich vom Cyclopentadien oder dessen Diels-Alder-Addukten ableiten, z.B. Cyclopentadien, Dicyclopentadien, $C_1$- bis $C_3$-Alkylcyclopentadiene, deren Dimere oder Codimere und Oligomere oder Cooligomere. Vorzugsweise verwendet man aus dieser Gruppe Cyclopentadien, Dicyclopentadien, Methyldicyclopentadien und Methylcyclopentadien. Die Oligomeren des Cyclopentadiens enthalten zu mehr als 80 Gew.% 3 bis 4 Cyclopentadieneinheiten. Sie werden durch Erhitzen von (Di)cyclopentadien und/oder Methyl(di)cyclopentadien in Substanz bzw. in einem Lösungsmittel hergestellt. Für die Herstellung der Leimungsmittel für Papier kann man auch Mischungen aus Cyclopentadien und Dicyclopentadien bzw. aus (Alkyl)cyclopentadien, (Alkyl)dicyclopentadien und Oligomeren des (Alkyl)cyclopentadiens verwenden. Diese sogenannten Cyclopentadienmonomeren können in untergeordnetem Maße, d.h. bis zu etwa 10 Gew.%, bezogen auf die eingesetzten Monomeren, auch lineare konjugierte Diene, wie Butadien-1,3, Isopren, Piperylen oder deren Codimere und/oder Cooligomere mit (Alkyl)cyclopentadien enthalten. Vorzugsweise wird ein technisch hergestelltes Dicyclopentadien eingesetzt, das eine Reinheit von mindestens 85 % aufweist und ungesättigte Kohlenwasserstoffe des Siedebereichs von 30 bis 170°C enthält. Solche technischen Dicyclopentadiene fallen beispielsweise bei der Wasserdampf-Crackung von Naphtha an.

Die Monomeren der Gruppe a) sind zu 40 bis 75 Gew.% am Aufbau der Leimungsmittel für Papier beteiligt.

Als polymerisierbare Verbindungen der Gruppe b) verwendet man ethylenisch ungesättigte Dicarbonsäureanhydride entweder allein oder in Mischung mit ethylenisch ungesättigten Carbonsäuren mit 3 bis 6-Kohlenstoffatomen oder deren Amide, wobei bis zu 30 Gew.% der ethylenisch ungesättigten Dicarbonsäureanhydride durch diese Verbindungen ersetzt werden können. Vorzugsweise verwendet man Maleinsäureanhydrid. Bis zu 30 Gew.% des Maleinsäureanhydrids können auch durch Ester, Halbester und/oder Halbamide der Maleinsäure, der Fumarsäure, Citraconsäure und Itaconsäure und/oder durch (Meth)acrylsäure oder Crotonsäure ersetzt sein.

Der Anteil an ungesättigten Dicarbonsäureanhydriden in den Leimungsmitteln für Papier ist von großer Bedeutung für das Eigenschaftsbild der Verbindungen. Verwendet man beispielsweise weniger als 25 Gew.% an polymerisierbaren Verbindungen der Gruppe b), bezogen auf die Summe der polymerisierbaren Verbindungen a), b) und c), so fällt die Leimungswirkung der Produkte deutlich niedriger aus. Sofern die polymerisierbaren Verbindungen der Gruppe b) zu mehr als 50 Gew.% am Aufbau der Oberflächenleimungsmittel beteiligt sind, erhält man Produkte, die nach teilweiser oder vollständiger Neutralisation mit wäßrigen Basen zu tief gefärbten Lösungen oder Dispersionen führen, die häufig stark schäumen. Für die Herstellung von Leimungsmitteln, die ein mittleres bis gutes Leimungsniveau haben und die nach der Behandlung mit wäßrigen Basen besonders schaumarme Lösungen bzw. Dispersionen ergeben, beträgt der Anteil an polymerisierbaren Verbindungen der Gruppe b) 25 bis 30 Gew.%. Zur Herstellung von Produkten mit besonders hoher Leimungswirkung bei dennoch gegenüber den marktgängigen Produkten deutlich niedrigerer Schäumneigung beträgt der Anteil an polymerisierbaren Verbindungen der Gruppe b) am Aufbau der Leimungsmittel 30 bis 45 Gew.%.

Als polymerisierbare Verbindungen der Gruppe c) können beispielsweise Alkene mit 2 bis 22 Kohlenstoffatomen verwendet werden, wie Ethylen, Propylen, Butylen, Isobutylen, Pentene, Hexene, Decene, Octadecene, Cyclohexen, Cycloocten und -decen. Außerdem eignen sich Alkine mit 2 bis 12 Kohlenstoffatomen, wie Acetylen, Propin, Butin sowie deren Alkyl-, Aryl-, Carboxyl-, Hydroxy- oder Halogenid-Gruppen tragende Derivate. Eine weitere Klasse von Verbindungen, die als Komponente c) verwendet werden kann, sind Vinylether mit 3 bis 15 C-Atomen, z.B. Methylvinylether, Butylvinylether und Hexylvinylether. Außerdem kommen Vinylaromaten mit 8 bis 12 Kohlenstoffatomen in Betracht, wie Styrol, Vinyltoluol, Inden und α-Methylstyrol sowie Ester der (Meth)acrylsäure mit 1 bis 22 Kohlenstoffatomen enthaltenden Alkoholen, Vinylester von gesättigten $C_1$- bis $C_{22}$-Carbonsäuren, Allylverbindungen, wie Allylalkylether, Allylglycidylether, Allylacetat, Allylchlorid, Allylalkohol und Buten(di)ol und/oder (Meth)acrylnitril. Geeignete Ester der (Meth)acrylsäure sind beispielsweise Methyl-, Ethyl-, Propyl- und Isobutyl(meth)acrylat als auch Hydroxyethylacrylat bzw. -methacrylat, Hydroxypropyl(meth)acrylat, Hydroxybutyl(meth)acrylat und Glycidyl(meth)acrylat. Geeignete Vinylester sind beispielsweise Vinylformiat, Vinylacetat, Vinylpropionat und Vinylester von $C_{12}$- bis $C_{14}$-Carbonsäuren. Auch Vinylhalogenide, wie Vinylchlorid, können eingesetzt werden. Der Anteil an Verbindungen der Gruppe c) richtet sich im wesentlichen danach, wie gut diese Verbindungen mit den polymerisierbaren Verbindungen der Gruppen a) und b) copolymerisierbar sind. Vorzugsweise werden bis zu 15 Gew.%, bezogen auf die Summe aus a), b) und c), Monomere der Gruppe c) eingesetzt.

Die polymerisierbaren Verbindungen der Gruppen a) und b) werden gegebenenfalls mit denjenigen der Gruppe c) bei

Temperaturen von 220 bis 280°C innerhalb von 0,5 bis 5 Stunden umgesetzt. Die Reaktionstemperatur und die Dauer der Umsetzung müssen auf die bei der Reaktion eingesetzten Monomeren abgestimmt werden. Vorzugsweise wird die Umsetzung der Monomeren der Gruppen a) bis c) in zwei Reaktionsstufen durchgeführt, wobei man in der ersten Stufe die Monomeren innerhalb von 0,5 bis 3 Stunden bei einer Temperatur von 250 bis 280°C zu einem Vorprodukt umsetzt, das anschließend in einer zweiten Reaktionsstufe innerhalb von 0,2 bis 2 Stunden bei Temperaturen von 220 bis 250°C nachpolymerisiert wird. Die Temperatur in der zweiten Reaktionsstufe wird dabei um mindestens 10°C tiefer eingestellt als in der ersten Reaktionsstufe. Eine weitere Variation ist dadurch gegeben, daß man die polymerisierbaren Verbindungen der Gruppen a) und gegebenenfalls c) mit 10 bis 50 Gew.% der polymerisierbaren Verbindungen der Gruppe b) umsetzt und in der zweiten Reaktionsstufe bei Temperaturen von 230 bis 250°C und innerhalb von vorzugsweise 0,2 bis 1,5 Stunden die restliche Menge an polymerisierbaren Verbindungen der Gruppe b) zusetzt. Die Monomeren können in der zweiten Reaktionsstufe auf einmal oder auch kontinuierlich zugegeben werden, wobei man nach beendeter Zugabe das Reaktionsgemisch noch mindestens etwa 0,2 Stunden nachpolymerisiert. Umsetzungen bei Temperaturen von weniger als 220°C führen zu unnötig langen Reaktionszeiten und zu schlechten Ausbeuten. Läßt man in der zweiten Reaktionsstufe die Temperatur in der Reaktionsmischung auf Werte oberhalb von 250°C ansteigen, so erhält man meistens dunkel gefärbte Produkte. In weniger als 0,2 Stunden kann die Reaktion in der zweiten Stufe nicht mit befriedigenden Ausbeuten durchgeführt werden. Mehr als 2 Stunden Reaktionszeit in der zweiten Stufe werden nicht benötigt. Die Umsetzung erfolgt vorzugsweise in Abwesenheit von Katalysatoren.

Die Umsetzung der Verbindungen a) bis c) kann in Substanz oder in Lösung erfolgen. Als Lösungsmittel verwendet man beispielsweise aliphatische oder aromatische Kohlenwasserstoffe, wie Benzine eines Siedebereichs von 50 bis 220°C, Hexan, Heptan, Cyclohexan, Benzol, Toluol, Xylol und Tetralin. Ferner eignen sich als Lösungsmittel Ester, wie Ethylacetat und Butylacetat, Ketone, wie Aceton, Methylethylketon und Dibutylketon, Ether, wie Dibutylether, Dipropylether und Tetrahydrofuran sowie halogenierte Kohlenwasserstoffe wie Ethylchlorid, Dichlormethan oder Dichlorethan, Chlorbenzol und Dichlorbenzol oder Dimethylformamid. Selbstverständlich ist es auch möglich, Lösungsmittelgemische zu verwenden. Vorzugsweise verwendet man aromatische Kohlenwasserstoffe enthaltende Lösungsmittelgemische, die auch gegebenenfalls geringe Anteile an nichtumgesetzten Einsatzoder Begleitstoffen der Reaktionen enthalten können. Die Umsetzung kann kontinuierlich oder auch diskontinuierlich durchgeführt werden. Dies gilt auch für den Fall, daß man die Umsetzung in zwei Reaktionsschritten vornimmt. Führt man die Reaktion in zwei Stufen in Gegenwart eines Lösungsmittels durch, so kann man vorteilhaft die Lösungsmittel, die gegebenenfalls noch geringe Anteile an nichtumgesetzten Einsatzstoffen der Gruppen a) bis c) und/oder Begleitstoffe enthalten, durch Destillation entfernen. Auch dieser Verfahrensschritt kann kontinuierlich oder diskontinuierlich durchgeführt werden, wobei die kontinuierliche Durchführung aus verfahrenstechnischen Gründen bevorzugt wird. Derartige Destillate können vorteilhaft für weitere Umsetzungen wiederverwendet werden.

Auch bei der Polymerisation in Substanz können gegebenenfalls vorhandene flüchtige Anteile aus dem Reaktionsgemisch entfernt werden. Da die Reaktion in aller Regel unter erhöhtem Druck erfolgt, werden niedrigsiedende

Bestandteile aus der Reaktionsmischung durch Entspannen oder durch Destillieren bei Normaldruck oder vermindertem Druck aus der Reaktionsmischung entfernt. Für die Destillation wählt man Temperaturen oberhalb der Erweichungspunkte der Harze, jedoch nicht Temperaturen von mehr als 250°C, da man dann mit einer unerwünschten Veränderung der Produkte rechnen muß. Die Destillation wird meistens zwischen 200 und 250, vorzugsweise 200 bis 230°C, durchgeführt.

Nach dem Entfernen der Lösungsmittel erhält man eine Schmelze, die, gegebenenfalls nach Erstarren und Abkühlen, durch Behandlung mit wäßrigen Lösungen von Basen in eine wäßrige Lösung bzw. Dispersion überführt wird. Man kann jedoch auch die Harze zunächst in Wasser lösen oder dispergieren und anschließend zumindest teilweise neutralisieren.

Die Harze haben Erweichungspunkte zwischen 70 und 200°C, vorzugsweise zwischen 75 und 160°C, Zahlenmittel-Molekulargewichte zwischen 300 und 2000, vorzugsweise zwischen 350 und 1200, und nach DIN 53 402 Säurezahlen zwischen 110 und 260.

Die Harze können unter erhöhtem Druck und vorzugsweise bei Normaldruck mit wäßrigen Lösungen von Basen bzw. mit Wasser behandelt werden. Eine weitere Möglichkeit zur Herstellung von Leimungsmittelpräparationen besteht darin, die Lösungen der Harze in den organischen Lösungsmitteln, die bei der Polymerisation verwendet wurden, zusammen mit der wäßrigen Phase zu erhitzen, gegebenenfalls unter vermindertem oder auch erhöhtem Druck, und die organischen Lösungsmittel auszukreisen. Auch hier ist es möglich, alkalische wäßrige Lösungen vorzulegen oder die

Neutralisation der Harze zum Teil oder vollständig nach erfolgtem Lösungs- oder Dispergierschritt durchzuführen.

Bei der Herstellung wäßriger Lösungen oder Dispersionen der Harze kann es vorteilhaft sein, übliche Zusätze, wie Dispergiermittel, Schutzkolloide, Schauminhibitoren oder auch die Löslichkeit verbessernde Hilfsmittel zuzusetzen. Für die Herstellung von Leimungsmitteln für Papier kann man auch Harze unterschiedlicher Zusammensetzung in Wasser bzw. einer Base lösen oder dispergieren.

Als Basen zum Neutralisieren der Harze verwendet man beispielsweise Natronlauge, Kalilauge, Ammoniak und/oder Amine, bevorzugt werden Natronlauge und/oder Ammoniak eingesetzt.

Als Amine kommen solche der allgemeinen Formel

$$R^1R^2R^3N$$

in Frage, wobei $R^1$, $R^2$ und $R^3$ gleich oder unterschiedlich sein können und für Wasserstoff oder $C_1$- bis $C_8$-Alkyl stehen. Die Alkylreste können geradkettig oder verzweigt sein und gegebenenfalls noch funktionelle Gruppen wie Hydroxyl-, Carbonyl-, Carboxyl- oder Aminogruppen tragen.

Bevorzugte Amine sind wasserlöslich, in denen $R^1$, $R^2$ und/oder $R^3$ Methyl, Ethyl, n- oder i-Propyl, n-, i- oder sec-Butyl ist. Besonders bevorzugt werden Hydroxyalkylamine wie (Di)(methyl)ethanolamin, (Methyl)diethanolamin, Triethanolamin und Verbindungen, die mehrere Aminogruppen enthalten, wie Ethylendiamin, Diethylentriamin und deren Alkylderivate mit 1 bis 3 C-Atomen je Alkylrest.

Zur Herstellung von wäßrigen Lösungen bzw. Dispersionen der Harze werden meistens 10 bis 30 Gew.-Teile Harz je 100 Gew.-Teile Lösung eingesetzt. Es ist häufig möglich, auch mehr als 30 Gew.-Teile Harz je 100 Gew.-Teile Lösung zu verwenden. Die höherkonzentrierten Lösungen bieten jedoch keine anwendungstechnischen Vorteile, weil eine exakte Dosierung dann nicht immer möglich ist. Lösungen oder Dispersionen, die weniger als 10 Gew.-Teile Harz je 100 Gew.-Teile Lösung enthalten, verursachen unnötig hohe Transportkosten.

Die Viskositäten der 10 bis 30 Gew.% Harze enthaltenden Lösungen bzw. Dispersionen liegen im allgemeinen unter 2000 mPas, vorzugsweise werden Lösungen mit Viskositäten unterhalb von 300 mPas eingesetzt. Es handelt sich hierbei um leicht pumpbare Lösungen oder Dispersionen.

Die Jodfarbzahlen der wäßrigen Lösungen aus beispielsweise 15 Gew.-Teilen Harz je 100 Gew.-Teilen Lösung liegen in der Regel zwischen 30 und 300, vorzugsweise zwischen 30 und 200. Der Neutralisationsgrad der Harze beträgt nach dem Überführen in die wäßrige Phase 50 bis 100 %. Der pH-Wert der wäßrigen Leimungsmittelpräparationen für Papier liegt zwischen 4,5 und 12, bevorzugt zwischen 5 und 10. Die erfindungsgemäß hergestellten Leimungsmittel können angewendet werden, ohne daß ein bestimmter pH-Wert eingestellt werden muß. Dies ist von besonderem Vorteil, da der pH-Wert der Präparationslösungen durch Zusätze stark verändert werden kann.

Es ist allgemein üblich, die Präparationslösungen für die Anwendung auf einen Feststoffgehalt von 0,05 bis 3,0 Gew.% zu verdünnen. Die Menge an Oberflächenleimungsmittel, die auf das Papier aufgebracht wird, liegt in der Regel zwischen 0,02 und 1,5, vorzugsweise zwischen 0,3 und 0,8 Gew.%, bezogen

auf trockenen Faserstoff. Die Präparationslösungen können außerdem weitere Hilfsstoffe enthalten, z.B. Stärke, Farbstoffe, Wachsemulsionen und gegebenenfalls andere Oberflächenleimungsmittel für Papier. Die Anwendung der erfindungsgemäßen Leimungsmittel für die Oberflächenleimung von Papier geschieht in der üblichen Weise, d.h. sie werden aus wäßriger Lösung oder Dispersion mit Hilfe einer Leimpresse auf das Papier aufgebracht. Es ist selbstverständlich auch möglich, die erfindungsgemäßen Leimungsmittel für Papier durch Sprühen oder Tauchen oder z.B. mit Hilfe eines Wasserschabers auf die Papierbahnen aufzubringen. Das mit der Präparationslösung behandelte Papier wird anschließend getrocknet. Die Leimung ist nach dem Trocknen des Papiers bereits voll ausgebildet.

Gleichzeitig mit der Oberflächenleimung kann auch eine Verfestigung des Papiers durchgeführt werden, indem man der Leimungsmittelpräparation ein Verfestigungsmittel zusetzt, z.B. Stärke oder synthetische Verfestigungsmittel auf Basis von Polymerisaten der Acrylsäure.

Daneben können die erfindungsgemäßen Leimungsmittel auch im Naßteil der Papiermaschine als Masseleimungsmittel eingesetzt werden. Die Zugabe der Produkte erfolgt entweder in die Bütte oder, kontinuierlich dosiert, in den Stoffstrang, z.B. vor den Vertikalsortierern. Zur Fixierung des Leimungsmittels müssen Aluminiumsulfat (Alaun) oder kationische Harze zugegeben werden. Man benötigt für eine Volleimung etwa 0,5 bis 1,5 Gew.%, bezogen auf trockenen Faserstoff, Leimungsmittel, die vorzugsweise mit 1 bis 3 Gew.% Alaun fixiert werden.

In den Beispielen beziehen sich alle Angaben, sofern nichts anderes vermerkt ist, auf das Gewicht der Stoffe. Die Einsatzstoffe und Lösungsmittel waren von

handelsüblicher technischer Qualität. Die Erweichungspunkte wurden auf der Kofler-Heizbank bestimmt. Dabei wurde diejenige Temperatur angegeben, bei der die Probe anfing anzukleben. Die Säurezahlen wurden nach DIN 53 402 ermittelt (von den Anhydridgruppen wird dabei nur jeweils eine Carboxylgruppe erfaßt). Die Jodzahlen wurden nach DIN 6162 gemessen. Die Zahlenmittel-Molekulargewichte wurden dampfdruckosmometrisch in Dimethylformamid bestimmt, wobei der auf die Konzentration 0 extrapolierte Wert angegeben wurde. Die wäßrigen Lösungen bzw. Dispersionen der Harze, die als Oberflächenleimungsmittel für Papier gemäß Erfindung getestet wurden, sind jeweils durch Behandeln von 15 Gew.-Teilen Harz je 100 Gew.-Teile Lösung hergestellt worden. Dadurch ist insbesondere die Vergleichbarkeit der Schäumwirkung der Leimungsmittel untereinander gegeben.

Herstellung der Oberflächenleimungsmittel für Papier

Leimungsmittel 1

Ein Druckreaktor, der bis 25 bar ausgelegt und mit einem Rührer, Zulaufvorrichtungen und einem Stickstoffanschluß ausgestattet war, wurde zunächst mehrfach mit Stickstoff gespült. Danach erhitzte man darin eine Lösung von 22,5 Teilen eines 97 %igen Dicyclopentadiens und 1,5 Teilen Maleinsäureanhydrid in 10 Teilen Xylol 55 Minuten lang auf eine Temperatur von 272°C. Danach kühlte man die Reaktionsmischung auf 235°C ab, gab 6 Teile Maleinsäureanhydrid zu und erwärmte die Mischung 45 Minuten lang auf 245°C. Füchtige Anteile wurden zunächst unter Überdruck, anschließend unter vermindertem Druck bei Temperaturen von 230 bis 200°C abdestilliert. Die Schmelze wurde dann ausgetragen. Man erhielt 29 Teile eines Harzes, das eine Säurezahl von 148, einen Erweichungspunkt von 105°C und ein Molgewicht von 570 hatte. 15 Teile dieses Harzes wurden mit 8 Teilen Diethanolamin und 77 Teilen Wasser

10 Minuten auf 90°C erwärmt. Man erhielt eine Lösung des Leimungsmittels 1). Die Jodfarbzahl der Lösung betrug 80.

Leimungsmittel 2

In dem im Beispiel 1 beschriebenen Reaktor wurden 22 Teile eines 95 %igen Dicyclopentadiens, 4 Teile Isobutylmethacrylat, 3,5 Teile Maleinsäureanhydrid und 12 Teile Ethylbenzol 1,5 Stunden lang auf eine Temperatur von 255°C erhitzt. Danach kühlte man die Reaktionsmischung auf 230°C ab, fügte 10,5 Teile Maleinsäureanhydrid zu und erhitzte die Mischung noch 45 Minuten lang auf eine Temperatur von 240°C. Danach destillierte man die flüchtigen Anteile bei einer Temperatur von 210 bis 180°C ab und erhielt 38,8 Teile eines Harzes, das eine Säurezahl von 193, ein Molgewicht von 520 und einen Erweichungspunkt von 109°C hatte. Das Harz wurde als Schmelze ausgetragen. 15 Teile des Harzes wurden mit 47 Teilen Wasser auf eine Temperatur von 65°C erwärmt. Danach gab man 38 Teile einer 5 %igen wäßrigen Ammoniaklösung zu und rührte die Mischung 2 Stunden bei Temperaturen in dem Bereich von 55 bis 65°C, bis man eine klare Lösung erhielt. Die Jodfarbzahl der Lösung betrug 210.

Leimungsmittel 3

In dem in Beispiel 1 beschriebenen Reaktor wurden 13,5 Teile eines technischen Dicyclopentadiens (mindestens 95 %ig), 4,2 Teile Styrol, 2 Teile Maleinsäureanhydrid, 1 Teil Fumarsäure und 12 Teile des Destillats, das bei der Herstellung des Leimungsmittels 2 erhalten wurde, 50 Minuten auf eine Temperatur von 270 bis 275°C erhitzt. Die Reaktionsmischung wurde dann auf eine Temperatur von 225°C abgekühlt und nach Zusatz von 8,5 Teilen Maleinsäureanhydrid und 0,8 Teilen Fumarsäure 1 Stunde auf 250°C erhitzt. Danach destillierte man bei Temperaturen in dem Bereich von 220 bis 205°C die flüchtigen Bestandteile solange ab, bis

Normaldruck erreicht war. Reste von flüchtigen Anteilen wurden durch Extrudieren auf einem Zweiwellenextruder bei einer Temperatur von 200°C und einem Druck von 60 mbar entfernt. Man erhielt ein Harz, das eine Säurezahl von 199, ein Molgewicht von 520 und einen Erweichungspunkt von 163°C hatte. 15 Teile dieses Harzes wurden zu einer auf 50°C erhitzten Lösung aus 76 Teilen Wasser und 9 Teilen einer 25 %igen wäßrigen Ammoniaklösung gegeben und 1 bis 2 Stunden auf eine Temperatur von 50 bis 60°C erwärmt. Man erhielt eine klare Lösung der Jodfarbzahl 250.

Leimungsmittel 4

In dem in Beispiel 1 beschriebenen Reaktor wurden 18 Teile eines 97 %igen Dicyclopentadiens, 4 Teile Isopren, 5 Teile Maleinsäureanhydrid, 9 Teile Isopropylbenzol und 6 Teile Toluol 50 Minuten auf eine Temperatur von 258 bis 262°C erhitzt. Anschließend kühlte man die Reaktionsmischung auf 235°C ab, gab 10 Teile Maleinsäureanhydrid und 3 Teile Methacrylsäure zu und ließ das Gemisch noch 1 Stunde bei 235 bis 240°C reagieren. Die flüchtigen Anteile wurden dann bei 240 bis 230°C abgetrennt und das Reaktionsprodukt als Schmelze ausgetragen. Man erhielt 39,6 Teile eines Harzes, das eine Säurezahl von 234, einen Erweichungspunkt von 218°C und ein Molgewicht von 590 hatte. 15 Teile dieses Harzes wurden 3 bis 4 Stunden bei Raumtemperatur mit 47 Teilen einer 5 %igen wäßrigen Ammoniaklösung und 38 Teilen Wasser behandelt. Man erhielt eine klare Lösung der Jodfarbzahl 260.

Leimungsmittel 5

In dem in Beispiel 1 beschriebenen Reaktor wurden 8 Teile Methylcyclopentadien, 10 Teile 95 %iges Dicyclopentadien, 2 Teile Diisobuten, 4 Teile Maleinsäureanhydrid und 12 Teile des Destillats, das bei der Herstellung des Leimungsmittels 4 erhalten wurde, 40 Minuten auf eine Temperatur von 275°C erhitzt. Anschließend kühlte man das Reaktionsgemisch auf eine Temperatur von 240°C ab, gab 3 Teile Maleinsäuremonomethylester und 6 Teile Maleinsäureanhydrid zu und ließ das Reaktionsgemisch nach 35 Minuten bei einer Temperatur von 250°C reagieren. Die Lösung wurde dann in einem Dünnschichtverdampfer, anschließend in einem Extruder bei 200°C und einem Druck von 60 mbar entgast. Man erhielt ein Harz, das eine Säurezahl von 210, einen Erweichungspunkt von 98°C und ein Molgewicht von 420 hatte. 15 Teile dieses Harzes wurden mit 12 Teilen N,N,N',N'-Tetramethylethylendiamin und 73 Teilen Wasser 10 Minuten lang auf 75°C erwärmt. Man erhielt eine klare Lösung, die eine Jodfarbzahl von 75 hatte.

<u>Leimungsmittel 6</u>

15 Teile des Harzes, das bei der Herstellung des Leimungsmittels 5 anfiel, wurde mit 35 Teilen einer 5 %igen wäßrigen Ammoniaklösung und 50 Teilen Wasser 15 bis 20 Minuten auf eine Temperatur von 60 bis 65°C erwärmt. Man erhielt eine klare Lösung der Jodfarbzahl 70.

<u>Leimungsmittel 7</u>

In dem in Beispiel 1 beschriebenen Reaktor wurden 7,2 Teile eines Gemisches von Oligocyclopentadienen (hergestellt durch einstündiges Erhitzen von 20 Teilen eines technischen, mindestens 95 %igen Dicyclopentadiens auf eine Temperatur von 190°C und Abtrennen der flüchtigen Anteile bei 120°C und 5 mbar), 3 Teile Vinylacetat, 14,6 Teile eines 97 %igen Dicyclopentadiens, 3,5 Teile Itaconsäure, 2 Teile Maleinsäureanhydrid und 14 Teile des Destillats, das bei der Herstellung des Leimungsmittels 5 anfiel, 40 Minuten auf eine Temperatur von 260 bis 264°C erhitzt. Anschließend kühlte man das Reaktionsgemisch auf eine Temperatur von 235°C ab, gab 9,7 Teile Maleinsäureanhydrid zu und erhitzte diese Mischung noch 55 Minuten lang auf

eine Temperatur von 240 bis 245°C. Die flüchtigen Anteile wurden dann nach der Methode entfernt, die bei der Herstellung des Leimungsmittels 3 angegeben ist. Man erhielt ein Harz, das eine Säurezahl von 200, einen Erweichungspunkt von 131°C und ein Molgewicht von 500 hatte. 15 Teile dieses Harzes wurden mit 33 Teilen einer 5 %igen wäßrigen Ammoniaklösung und 52 Teilen Wasser 10 bis 20 Minuten lang auf eine Temperatur von 70 bis 75°C erhitzt. Man erhielt eine klare Lösung, die eine Jodfarbzahl von 110 hatte.

Leimungsmittel 8

In dem in Beispiel 1 beschriebenen Reaktor wurden 5 Teile Methyldicyclopentadien, 16 Teile eines technischen, mindestens 95 %igen Dicyclopentadiens, 10 Teile Maleinsäureanhydrid, 4 Teile Crotonsäure und 10 Teile eines Gemisches aus 15 Teilen Cyclohexan und 35 Teilen Xylol eine Stunde auf 275°C erhitzt. Danach kühlte man die Mischung auf eine Temperatur von 230°C ab und ließ das Reaktionsgemisch 1 Stunde bei dieser Temperatur nachreagieren. Die Mischung wurde dann abgekühlt und in Form der Lösung ausgetragen. 8 Teile der Lösung wurden dann in einem Glaskolben, der mit Rührer, Destillationsbrücke und Vakuumanschluß versehen war, auf eine Temperatur von 160 bis 180°C erhitzt. Die flüchtigen Anteile wurden zunächst bei Normaldruck und anschließend im Vakuum (50 mbar) entfernt. Man erhielt 5,8 Teile eines Harzes, das eine Säurezahl von 231, einen Erweichungspunkt von 97°C und ein Molgewicht von 450 hatte. 1,5 Teile dieses Harzes wurden dann mit 3,8 Teilen einer 5 %igen wäßrigen Ammoniaklösung und 1,7 Teilen Wasser auf eine Temperatur von 65°C erhitzt. Nachdem man die Mischung 15 bis 20 Minuten auf diese Temperatur erhitzt hatte, gab man 3 Teile Wasser hinzu und ließ abkühlen. Man erhielt eine klare Lösung, die eine Jodfarbzahl von 170 hatte.

Leimungsmittel 9

In dem in Beispiel 1 beschriebenen Reaktor wurden 21 Teile eines 97 %igen Dicyclopentadiens, 3 Teile Methylmethacrylat, 6 Teile Benzol und 7 Teile Tetralin 1 Stunde auf eine Temperatur von 270°C erhitzt. Das Reaktionsgemisch wurde dann auf 230°C abgekühlt und mit 13 Teilen Maleinsäureanhydrid und 3 Teilen Maleinsäuremono-2-ethylhexylester versetzt und 1 Stunde auf eine Temperatur von 230°C erhitzt. Danach wurden flüchtige Anteile bei Temperaturen von 230 bis 220°C bei fortwährender Erniedrigung des Drucks bis zuletzt 40 mbar entfernt. Man erhielt 36,5 Teile eines Harzes, das eine Säurezahl von 192, einen Erweichungspunkt von 122°C und ein Molgewicht von 670 hatte. 15 Teile dieses Harzes wurden mit 35 Teilen einer 5 %igen wäßrigen Ammoniaklösung und 50 Teilen Wasser etwa 20 Minuten auf eine Temperatur von 60 bis 70°C erwärmt. Man erhielt eine klare Lösung, die eine Jodfarbzahl von 180 hatte.

Herstellung von Leimungsmitteln gemäß Stand der Technik

Vergleichs-Leimungsmittel 1 gemäß US-PS 2 608 550

160 Teile eines 97 %igen Dicyclopentadiens und 107 Teile Maleinsäureanhydrid wurden 2 Stunden auf eine Temperatur von 180°C und anschließend 4,5 Stunden auf 220°C erhitzt. Danach entfernte man die flüchtigen Anteile bei 50 mbar und erhielt 228 Teile eines Harzes, das eine Säurezahl von 220, einen Erweichungspunkt von 134°C und ein Molgewicht von 560 hatte. Aus 15 Teilen dieses Harzes, 46,5 Teilen einer 5 %igen wäßrigen Ammoniaklösung und 38,5 Teilen Wasser wurde eine Lösung hergestellt, die eine Jodfarbzahl von 400 hatte.

Vergleichsleimungsmittel 2 gemäß GB-PS 1 356 307

57 Teile eines 97 %igen Dicyclopentadiens, 13 Teile Butadien und 20 Teile Maleinsäureanhydrid wurden in einem

Laborautoklaven 3 Stunden auf 220°C erhitzt, das Produkt wurde bei 170 bis 190°C bei einem Druck von 50 bis 70 mbar von flüchtigen Bestandteilen befreit. 40 Teile eines bei Raumtemperatur zähflüssigen Harzes der Säurezahl 172 wurden erhalten. 15 Teile dieses Harzes wurden mit 35 Teilen einer 5 %igen wäßrigen Ammoniaklösung und 50 Teilen Wasser 30 bis 60 Minuten auf 60 bis 70°C erwärmt, man erhielt eine Dispersion.

Neben den Vergleichs-Leimungsmitteln 1 und 2 wurden ein alternierend aus Styrol und Maleinsäureanhydrid aufgebautes Copolymerisat in Form seiner wäßrigen Natriumsalzlösung, hergestellt nach DE-OS 18 11 579, als Vergleichs-Leimungsmittel 3 und ein Copolymerisat aus Styrol, Maleinsäureanhydrid und Acrylsäure in Form seiner wäßrigen Ammoniumsalzlösung, hergestellt nach DE-OS 25 02 172, als Vergleichs-Leimungsmittel 4 geprüft.

Je nach Art und Menge der Zusätze kann der pH-Wert der Präparationslösungen verändert werden. Um zu zeigen, daß die erfindungsgemäßen Leimungsmittel in einem weiten pH-Bereich gut einsetzbar sind, wurde die Leimung auch an Präparationslösungen untersucht, deren pH-Wert durch Zusatz von Säure auf 6 eingestellt war.

Beispiele

Durchführung der Oberflächenleimung im Labor

Als Prüfpapier wird ein in der Masse ungeleimtes holzfreies Offsetpapier mit 14 Gew.% Asche (Clay) und 2 Gew.% Alaun verwendet. Das Flächengewicht des Papiers beträgt 70 g/m². Die Imprägnierung des Papiers mit der Präparationslösung aus Leimmittel und Stärke erfolgt in einer Laborleimpresse. Nach Trocknen auf einem mit Dampf auf

90°C beheizten Trockenzylinder und mindestens zweistündigem Klimatisieren bei 23°C und 50% rel. Luftfeuchtigkeit wurde der Leimungsgrad nach Cobb (DIN 53 132) und mit Hilfe der Tintenschwimmzeit in Minuten bis zum 50 %igen Durchschlag mit einer Normtinte nach DIN 53 126 bestimmt.

Daneben wurde durch Schütteln von 100 ml Präparationslösung in einem verschlossenen 250 ml-Standzylinder die Schaumneigung der Präparationen bestimmt. Angegeben wird das Schaumvolumen in ml sofort und 5 Minuten nach Ende des Schüttelns. Alle Messungen wurden dreimal durchgeführt. Die in den Tabellen angegebenen Werte sind jeweils die Mittelwerte.

Die Präparationslösungen enthielten jeweils 4,5 g/l (gerechnet auf Festgehalt) Leimungsmittel und 60 g/l einer handelsüblichen Oberflächenstärke, hier einer oxidativ abgebauten Kartoffelstärke.

Tabelle 1

Leimungs- und Schäumwerte von Leimmittel-Stärke-Präparationen ohne pH-Einstellung (schwach alkalisch)

| Leimungsmittel | Cobb-Wert [g/m²] | Tintenschwimmzeit [min] | Schäumwert [ml] sofort | Schäumwert [ml] nach 5 min |
|---|---|---|---|---|
| 1 | 21 | 10 | 35 | 20 |
| 2 | 19 | 45 | 70 | 45 |
| 3 | 18 | 60 | 75 | 40 |
| 4 | 21 | 30 | 80 | 45 |
| 5 | 25 | 18 | 70 | 55 |
| 6 | 20 | 35 | 60 | 30 |
| 7 | 23 | 16 | 70 | 40 |
| 8 | 19 | 31 | 75 | 35 |
| 9 | 19 | 55 | 75 | 45 |
| Vergleichsleimungsmittel | | | | |
| 1 | 22 | 13 | 120 | 120 |
| 2 | 35 | 1 | 80 | 65 |
| 3 | 23 | 14 | 100 | 70 |
| 4 | 22 | 15 | 150 | 140 |

Tabelle 2

Leimungs- und Schäumwerte von Leimmittel-Stärke-Präparationen, eingestellt auf pH = 6

| Leimungsmittel | Cobb-Wert [g/m²] | Tintenschwimmzeit [min] | Schäumwert [ml] sofort | Schäumwert [ml] nach 5 min |
|---|---|---|---|---|
| 1 | 24 | 8 | 30 | 10 |
| 2 | 19 | 17 | 70 | 55 |
| 3 | 19 | 45 | 75 | 50 |
| 4 | 23 | 10 | 50 | 30 |
| 5 | 22 | 14 | 70 | 50 |
| 6 | 21 | 18 | 70 | 55 |
| 7 | 24 | 9 | 70 | 40 |
| 8 | 21 | 13 | 75 | 50 |
| 9 | 21 | 22 | 70 | 45 |
| Vergleichsleimungsmittel | | | | |
| 1 | 24 | 7 | 130 | 130 |
| 2 | 50 | 0,5 | 80 | 60 |
| 3 | 25 | 8 | 130 | 130 |
| 4 | 46 | 0,5 | 90 | 80 |

Durchführung der Masseleimung

Einer Stoffsuspension aus 50 Gew.% gebleichtem Fichtensulfitzellstoff und 50 Gew.% gebleichtem Holzschliff wurden bei einer Stoffdichte von 0,5% je 1% (fest gerechnet) des Leimmittels und dann 2% Alaun zugesetzt. Der pH-Wert der Suspension wurde mit Schwefelsäure auf pH = 5,0 eingestellt und die Blätter auf einem Rapid-Köthen-Blattbildner gefertigt. Nach dem Trocknen auf

einem Metallzylinder bei 90°C wurden die Blätter 24 Stunden bei 23°C und 50% rel. Luftfeuchtigkeit klimatisiert und der Leimungsgrad nach Cobb (DIN 53 132) bestimmt. Die Ergebnisse sind in Tabelle 3 zusammengestellt.

Tabelle 3

Leimungswerte bei Masseleimung

| Vergleichs-Leimungsmittel | Cobb-Wert [g/$m^2$] |
|---|---|
| 1 | 27 |
| 2 | 27 |
| 3 | 85 |
| 4 | 88 |
| Leimungsmittel | |
| 2 | 24 |
| 3 | 27 |
| 10 | 17 |
| 11 | 26 |

Patentansprüche

1. Leimungsmittel für Papier auf Basis von säuremodifizierten Cyclopentadienharzen, dadurch gekennzeichnet, daß die Leimungsmittel durch Umsetzung von Mischungen polymerisierbarer Verbindungen aus

a) 40 bis 75 Gew.% Cyclopentadien, Alkylcyclopentadienen mit 1 bis 3 C-Atomen im Alkylrest, deren Dimeren, Oligomeren, Codimeren oder Cooligomeren oder Gemischen daraus,
b) 25 bis 50 Gew.% ethylenisch ungesättigten Dicarbonsäureanhydriden, die bis zu 30 Gew.% durch ethylenisch ungesättigte Carbonsäuren mit 3 bis 6 Kohlenstoffatomen ersetzt sein können, und gegebenenfalls
c) 0 bis 25 Gew.% mindestens eines Alkens mit 2 bis 22 C-Atomen, Alkins mit 2 bis 12 C-Atomen, Vinylethers mit 3 bis 15 C-Atomen, Vinylaromaten mit 8 bis 12 C-Atomen, Esters der (Meth)acrylsäure mit 1 bis 22 C-Atome enthaltenden Alkanolen, Vinylesters von gesättigten $C_1$- bis $C_{22}$-Carbonsäuren, Allylverbindungen und/oder (Meth)acrylnitril

bei Temperaturen von 220 bis 280°C innerhalb von 0,5 bis 5 Stunden und Behandeln der Reaktionsprodukte mit wäßrigen Lösungen von Basen hergestellt sind.

2. Leimungsmittel für Papier nach Anspruch 1, dadurch gekennzeichnet, daß als Basen wäßrige Alkali-, Ammoniak- und/oder Aminlösungen eingesetzt werden.

3. Leimungsmittel nach den Ansprüchen 1 und 2, dadurch gekennzeichnet, daß die polymerisierbaren Verbindungen der Gruppe a), b) und c) 0,5 bis 3 Stunden bei Temperaturen von 250 bis 280°C in einer ersten Reaktionsstufe zu einem Vorprodukt umgesetzt werden, das anschließend in einer zweiten Reaktionsstufe 0,2 bis 2 Stunden bei Temperaturen von 220 bis 250°C nachpolymerisiert wird, wobei die Temperatur bei der Nachpolymerisation um mindestens 10°C unterhalb der Temperatur in der ersten Reaktionsstufe liegt.

4. Leimungsmittel nach den Ansprüchen 1 bis 3, dadurch gekennzeichnet, daß die polymerisierbaren Verbindungen a) und gegebenenfalls c) in der ersten Reaktionsstufe mit 10 bis 50 Gew.% der polymerisierbaren Verbindungen der Gruppe b) und in der zweiten Reaktionsstufe mit der restlichen Menge an polymerisierbaren Verbindungen der Gruppe b) umgesetzt werden.

5. Leimungsmittel nach den Ansprüchen 1 bis 4, dadurch gekennzeichnet, daß als polymerisierbare Verbindungen der Gruppe a) Cyclopentadien und/oder Dicyclopentadien eingesetzt werden.

6. Leimungsmittel nach den Ansprüchen 1 bis 5, dadurch gekennzeichnet, daß als polymerisierbare Verbindungen der Gruppe b) Maleinsäureanhydrid eingesetzt wird.

7. Leimungsmittel nach den Ansprüchen 1 bis 6, dadurch gekennzeichnet, daß als polymerisierbare Verbindungen der Gruppe c) Styrol, Methylstyrol, (Meth)acrylsäureester von Alkoholen mit 1 bis 8 C-Atomen, (Meth)acrylnitril und/oder Vinylacetat eingesetzt werden.

Europäisches Patentamt

# EUROPÄISCHER RECHERCHENBERICHT

**0081139**

Nummer der Anmeldung

EP 82 11 0855

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | DE-A-2 656 830 (BORG-WARNER)<br>* Anspruch 1; Seite 4, drei letzte Absätze und Seite 5, zwei erste Absätze; Seiten 7,8, zwei erste Absätze; Beispiele 1,6 *<br>--- | 1,2,5, 6 | D 21 H 3/40<br>C 08 F 232/00 //<br>(C 08 F 232/00<br>C 08 F 222/04<br>C 08 F 220/02 ) |
| Y | DE-A-2 352 621 (TOYO INK; NIPPON OIL)<br>* Anspruch 4; Seiten 3-5,8 *<br>--- | 1,2,5, 6 | |
| D,A | GB-A-1 356 309 (ESSO)<br>--- | | |
| A | EP-A-0 000 221 (VEBA-CHEMIE)<br>----- | | |
| | | | **RECHERCHIERTE SACHGEBIETE (Int. Cl. 3)** |
| | | | C 08 F<br>D 21 H |

Der vorliegende Recherchenbericht wurde für alle Patentansprüche erstellt.

| Recherchenort | Abschlußdatum der Recherche | Prüfer |
|---|---|---|
| DEN HAAG | 02-03-1983 | NESTBY K. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82